Europäisches Patentamt

European Patent Office

Office européen des brevets

(11) Publication number: **0 244 335 B1**

# EUROPEAN PATENT SPECIFICATION

(45) Date of publication of patent specification: **15.01.92**   (51) Int. Cl.⁵: **B64D  33/04**, B64C 21/10

(21) Application number: **87630052.6**

(22) Date of filing: **07.04.87**

(54) **Diffuser.**

(30) Priority: **30.04.86 US 857910**

(43) Date of publication of application:
**04.11.87 Bulletin  87/45**

(45) Publication of the grant of the patent:
**15.01.92 Bulletin  92/03**

(84) Designated Contracting States:
**DE FR GB IT**

(56) References cited:
**US-A- 2 800 291**
**US-A- 2 956 400**

(73) Proprietor: **UNITED TECHNOLOGIES CORPO-
RATION**
**United Technologies Building 1, Financial
Plaza**
**Hartford, CT 06101(US)**

(72) Inventor: **Presz, Walter M., Jr.**
**40 Grove St**
**Wilbraham Massachusetts 01095(US)**
Inventor: **Paterson, Robert W.**
**4 Pinecrest Drive**
**Simsbury Connecticut 06117(US)**
Inventor: **Werle, Michael J.**
**4 Porter Drive**
**West Hartford Connecticut 06117(US)**

(74) Representative: **Weydert, Robert et al**
**OFFICE DENNEMEYER S.à.r.l. P.O. Box 1502**
**L-1015 Luxembourg(LU)**

Rank Xerox (UK) Business Services

# Description

This invention relates to a diffuser adapted to carry fluid in a downstream, principal flow direction, comprising wall means defining an inlet to said diffuser and an outlet to said diffuser with said inlet having a cross-sectional area less than the cross-sectional area of the outlet, said wall means having surface means extending from said inlet to said outlet, and said wall means having means to prevent or delay streamwise, two-dimensional boundary layer separation from said surface means. A diffuser of this type is disclosed in US-A-2,800,291.

Diffusers are well known in the art. As used herein a diffuser is defined as a fluid carrying passage which has an inlet cross-sectional flow area less than its outlet cross-sectional flow area, and which decreases the velocity of a fluid in the direction of principal flow or increases its pressure, or a combination of the two. Sometimes diffusers are used simply because of a physical requirement to increase the cross-sectional flow area of the passage, such as to connect pipes of different diameters.

If the walls of the diffuser are too steep relative to the principal flow direction, streamwise, two-dimensional boundary layer separation may occur. Streamwise, two-dimensional boundary layer separation, as used in this specification and appended claims, means the breaking loose of the bulk fluid from the surface of a body, resulting in flow near the wall moving in a direction opposite the bulk fluid flow direction. Such separation results in high losses, low pressure recovery, and lower velocity reduction. When this happens the diffuser is said to have stalled. Stall occurs in diffusers when the momentum in the boundary layer cannot overcome the increase in pressure as it travels downstream along the wall, at which point the flow velocity near the wall actually reverses direction. From that point on the boundary layer cannot stay attached to the wall and a separation region downstream thereof is created.

To prevent stall a diffuser may have to be made longer so as to decrease the required diffusion angle; however, a longer diffusion length may not be acceptable in certain applications due to space or weight limitations, for example, and will not solve the problem in all circumstances. It is, therefore, highly desirable to be able to diffuse more rapidly (i.e., in a shorter distance) without stall or, conversely, to be able to diffuse to a greater cross-sectional flow area for a given diffuser length than is presently possible with diffusers of the prior art.

Diffusers of the prior art may be either two- or three-dimensional. Two-dimensional diffusers are typically four sided, with two opposing sides being parallel to each other and the other two opposing sides diverging from each other toward the diffuser outlet. Conical and annular diffusers are also sometimes referred to as two-dimensional diffusers. Annular diffusers are often used in gas turbine engines. A three-dimensional diffuser can for example, be four sided, with both pairs of opposed sides diverging from each other.

In US-A-2,800,291 referred to there are provided a plurality of excrescences of generally triangular planform rising out of the diffuser surface and defining channels therebetween. The excrescences increase in thickness in the downstream direction. Sharp edges are formed between the upper surfaces and the side surfaces of the excrescences as well as between the side surfaces of the excrescences and the diffuser wall. The excrescences are effective to delay or prevent streamwise, two-dimensional boundary layer separation by maintaining boundary layer thinness.

The object of the present invention is to provide a diffuser having improved operating characteristics to accomplish the same amount of diffusion in a shorter length than that of the prior art or to achieve greater diffusion for a given length than prior art diffusers.

In accordance with the invention to achieve this, the diffuser is characterized in that said means to prevent or delay streamwise, two-dimensional boundary layer separation comprises a plurality of downstream extending, adjoining, alternating troughs and ridges formed in said surface means and sized and oriented such that the diffuser continues to increase in cross-sectional area from its inlet to its outlet, said troughs and ridges being U-shaped in cross-section taken perpendicular to the principal flow direction, adjoining troughs and ridges blending smoothly with each other along their length forming a smoothly undulating surface extending downstream, said undulations initiating upstream of where streamwise, two-dimensional boundary layer separation on said diffuser surface would occur.

If the troughs and ridges extend to the diffuser outlet, the diffuser wall will terminate in a wave-shape, as viewed looking upstream. In cases where a steep diffuser wall becomes less steep downstream such that separation over the downstream portion is no longer a problem, the troughs and ridges can be terminated before the outlet. There may also be other reasons for not extending the troughs and ridges to the outlet.

It is believed that the troughs and ridges smoothly blending with each other delay or prevent the catastrophic effect of streamwise two-dimensional boundary layer separation by providing three-dimensional relief for the low momentum boundary layer flow. The local flow area variations created by the troughs and ridges produce local control of pressure gradients and allow the boundary layer approaching an adverse pressure gradient region to move laterally instead of separating from the wall surface. It is believed that as the boundary layer flows downstream and encounters a ridge, it thins out along the top of the ridge and picks up lateral momentum on either side of the peak of the ridge toward the troughs. In corresponding fashion, the boundary layer flowing into the trough is able to pick up lateral momentum and move laterally on the walls of the trough on either side thereof. The net result is the elimination (or at least the delay) of two-dimensional boundary layer separation because the boundary layer is able to run around the pressure rise as it moves toward the trailing edge. The entire scale of the mechanism is believed to be inviscid in nature and not tied directly to the scale of the boundary layer itself.

To have the desired effect of delaying or preventing stall, it is believed that the maximum depth of the trough (i.e., the peak to peak wave amplitude) will need to be at least about twice the 99% boundary layer thickness immediately upstream of the troughs. Considerably greater wave amplitudes are expected to work better. The wave amplitude and shape which minimizes losses is most preferred.

The troughs and ridges may be used with virtually any type of two- or three- dimensional diffusers. Furthermore, the diffusers of the present invention may be either subsonic or supersonic. If supersonic, the troughs and ridges will most likely be located downstream of the expected shock plane, but may also cross the shock plane to aleviate separation losses caused by the shock itself.

The foregoing and other features and advantages of the diffuser will become more apparent in the light of the following detailed description of preferred embodiments thereof as illustrated in the accompanying drawing, wherein:

Fig. 1 is a simplified cross-sectional view of a two-dimensional diffuser incorporating the features of the present invention.

Fig. 2 is a view taken generally in the direction 2-2 of Fig. 1.

Fig. 3 is a simplified, cross-sectional view of a three-dimensional diffuser incorporating the features of the present invention.

Fig. 4 is a view taken in the direction 3-3 of Fig. 3.

Fig. 5 is a simplified cross-sectional view of a axisymmetric diffuser incorporating the features of the present invention.

Fig. 6 is a view taken in the direction 6-6 of Fig. 5.

Fig. 7 is a simplified cross-sectional view of an annular, axisymmetric diffuser configured in accordance with the present invention.

Fig. 8 is a partial view taken in the direction 8-8 of Fig. 7.

Fig. 9 is a cross-sectional view of a step diffuser which incorporates the features of the present invention.

Fig. 10 is a view taken generally in the direction 10-10 of Fig. 9.

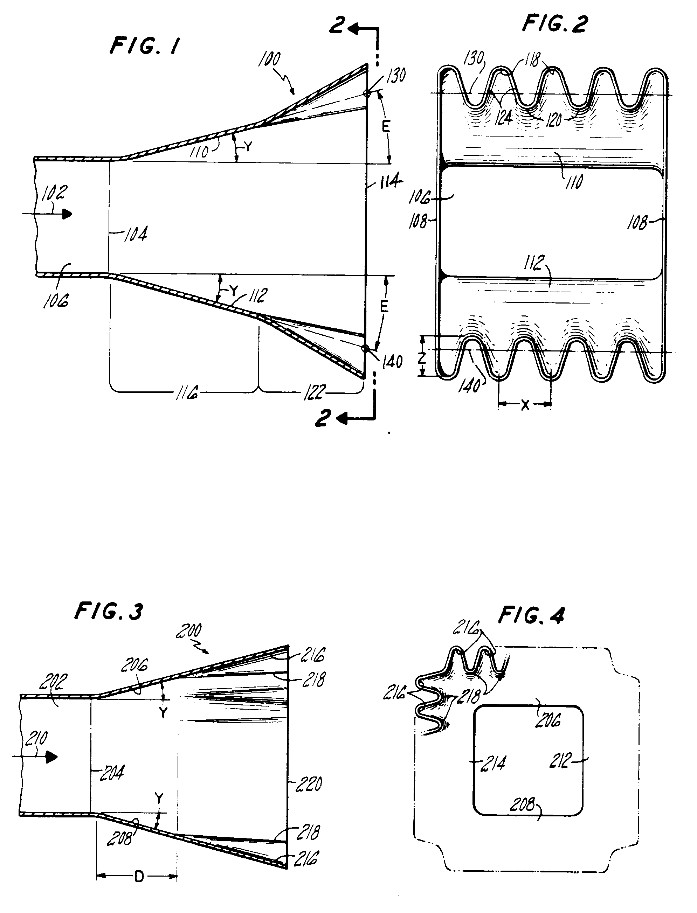

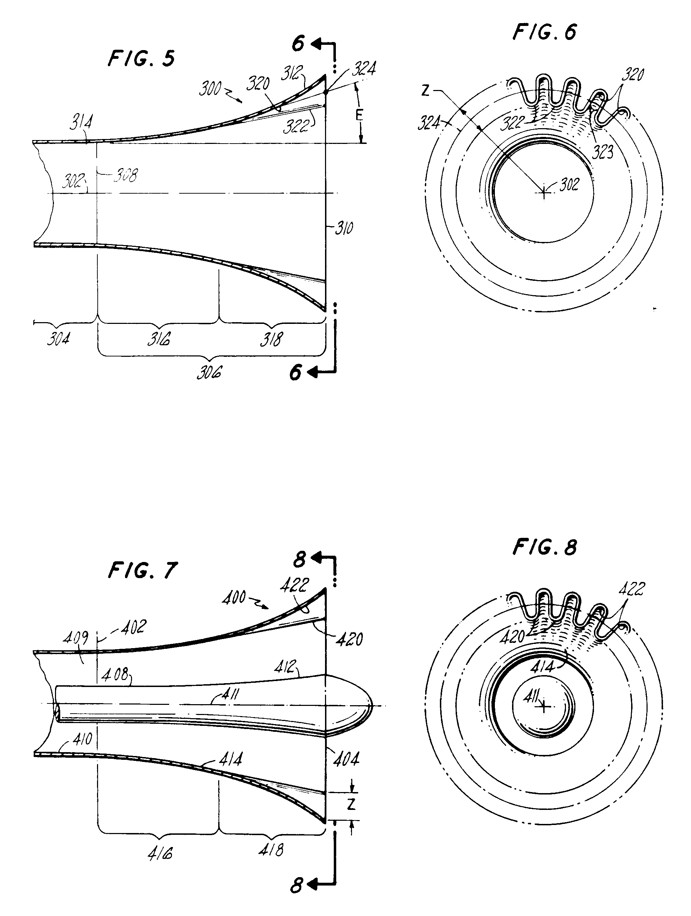

Referring to Figs. 1 - 2, an improved diffuser 100 is shown. In this embodiment the diffuser is a two-dimensional diffuser. Fluid flowing in a principal flow direction represented by the arrow 102 enters the inlet 104 of the diffuser from a flow passage 106. The diffuser 100 includes a pair of parallel, spaced apart sidewalls 108 extending in the principal flow direction, and upper and lower diverging walls 110, 112, respectively. The outlet of the diffuser is designated by the reference numeral 114. The walls 110, 112 are flat over the initial upstream portion 116 of their length. Each of these flat portions diverge from the principal flow direction by an angle herein designated by the letter Y. The remaining downstream portion 122 of each wall 110, 112 includes a plurality of downstream extending, alternating, adjoining troughs 118 and ridges 120. The ridges and troughs are basically "U" shaped in cross section and blend smoothly with each other along their length to form a smooth wave shape at the diffuser outlet 114. The troughs and ridges thereby form an undulating surface extending over the downstream portion 122 of the diffuser 100. In this embodiment the troughs and ridges also blend smoothly with the flat upstream wall portions 116 and increase in depth or height (as the case may be) toward the outlet 114 to a final wave amplitude (i.e., trough depth) Z. Although not the case in this embodiment, it may be preferable to have the sidewalls 124 parallel to each other (see Fig. 6). One constraint on the design of the troughs and ridges is that they must be sized and oriented such that the diffuser continues to increase in cross-sectional area from its inlet to its outlet.

For purposes of explanation, it is assumed that if the flat wall portions 116 were extended further downstream to the plane of the diffuser outlet 114 at the same angle Y, the diffuser would have an outlet area $A_O$, but would stall just downstream of the plane where the undulating surface is shown to begin. In this embodiment the undulations prevent such stall without changing the outlet area $A_O$. Thus, the bottoms of the troughs 118 are disposed on one side of imaginary extensions of the wall portions 116; and the peaks of the ridges are on the other side, such that the same outlet area $A_O$ is obtained.

Of course, depending upon the initial angle Y, the permissible length of the diffuser, and the shape and size of the undulations, it may be possible to make the outlet area even greater than $A_O$. The size of the outlet area is a matter of choice, depending upon need, the limitations of the present diffuser, and any other constraints imposed upon the system.

As used hereinafter, the "effective diffuser outlet boundary line" is herein defined as a smooth, non-wavy imaginary line in the plane of the diffuser outlet 114, which passes through the troughs and ridges to define or encompass a cross-sectional area that is the same as the actual cross-sectional area at the diffuser outlet. In the embodiment of Figs. 1 - 2 there are two such lines; and they are the phantom lines designated by the reference numerals 130 and 140. Additionally, the "effective diffusion angle" E for the undulating surface portion of the diffuser is that angle formed between a) a straight line connecting the diffuser wall at the beginning of the undulations to the "effective diffuser outlet boundary line" and b) the principal flow direction. It is possible to contour and size the ridges and troughs such that streamwise two-dimensional boundary layer separation does not occur at "effective diffusion angles" greater than would otherwise be possible for the same diffuser length. Thus, the undulations in the diffuser walls permit diffusers to be designed with either greater area ratios for the same diffusing length, or shorter diffusing lengths for the same area ratio.

In designing a diffuser, the troughs and ridges (undulations) must initiate upstream of the point where boundary layer separation from the walls would be otherwise expected to occur. They could, of course, extend over the entire length of the diffuser, although that is not likely to be required. Although, in the embodiment of Figs. 1 and 2, the ridges are identical in size and shape to the troughs (except they are inverted), this is not a requirement. It is also not required that adjacent troughs (or ridges) be the same.

To have the desired effect of preventing boundary layer separation, it is believed the maximum depth of the troughs (the peak-to-peak wave amplitude Z) will need to be at least twice the 99% boundary layer thickness immediately forward of the upstream ends of the troughs. It is believed that best results will be obtained when the maximum wave amplitude Z is about the size of the thickness (perpendicular to the principal flow direction and to the surface of the diffuser) of the separation region (i.e., wake) which would be expected to occur without the use of the troughs and ridges. If X is the distance between adjacent troughs (i.e.,"wavelength") at the location of their maximum amplitude Z (usually at the diffuser outlet), the ratio of X to Z is preferably no greater than about 4.0 and no less than about 0.5. In general, if the amplitude Z is too small and or X is too large in relation thereto, stall may only be delayed, rather than eliminated. On the other hand, if Z is too great relative to X and/or the troughs are too narrow, viscous losses could negate some or all of the benefits of the invention. The present diffuser is intended to encompass any size troughs and ridges which provide improvement over the prior art.

A three-dimensional diffuser 200 is shown in Figs. 3 and 4. The inlet passage 202 is of constant rectangular cross-section over its length. At the diffuser inlet 204, upper and lower walls 206, 208, respectively, each diverge from the principal flow direction 210 by an angle Y; and diffuser side walls 212, 214 also diverge from the principal flow direction at the same angle. The walls 206, 208, 212 and 214 are flat for a distance D downstream of the diffuser inlet 204, and then each is formed into a plurality of downstream extending, adjoining, alternate troughs 216 and ridges 218, which blend smoothly with each other along their length to the diffuser outlet 220. The upstream ends of the troughs and ridges also blend smoothly with the respective flat wall portions 206, 208, 212, 214. The troughs increase gradually in depth in the downstream direction from substantially zero to a maximum depth at the diffuser outlet 220. The undulating surfaces formed by the troughs and ridges terminate at the diffuser outlet as a smooth wave shape.

In Figs. 5 and 6 an axisymmetric diffuser is shown herein designated by the reference numeral 300. The diffuser has an axis 302, a cylindrical inlet passage 304 and a diffuser section 306. The diffuser section inlet is designated by the reference numeral 308, and the outlet by the reference numeral 310. An upstream portion 316 of the diffuser section 306 is simply a curved, surface of revolution about the axis 302 which is tangent to the wall 314 at the inlet 308. The remaining downstream portion 318 is an undulating surface of circumferentially spaced apart adjoining troughs and ridges 320, 322, respectively, each of which initiates and blends smoothly with the downstream end of the diffuser portion 316 and extends downstream to the outlet 310. The troughs and ridges gradually increase in depth and height, respectively, from zero to a maximum at the outlet 310. In this embodiment the sidewalls 323 of each trough are parallel to each other. The effective diffuser outlet boundary line is designated by the reference numeral 324 which defines a circle having the same cross-sectional area as the cross-sectional area of the diffuser at the outlet 310. The effective diffusion angle E is shown in Fig. 5.

Assuming that no boundary layer separation occurs along the surface of the upstream portion 316 of the diffuser, the troughs and ridges allow greater diffusion than would otherwise be possible for the same diffuser axial length but using a diffuser of the prior art, such as if the downstream portion 318 of the diffuser were a segment of a cone or some other surface of revolution about the axis 302.

For purposes of sizing and spacing the troughs and ridges of axisymmetric diffusers using the guidelines hereinable set forth for the two-dimensional diffuser of Figs. 1 and 2, the wave amplitude Z for the axisymmetric diffusers is measured along a radial line, and the wavelength X will be an average of the radially outermost peak-to-peak arc length and the radially innermost peak-to-peak arc length.

With reference to Figs. 7 and 8, an annular, axisymmetric diffuser is generally represented by the reference numeral 400. The plane of the diffuser inlet is designated by the reference numeral 402 and the plane of the outlet is designated by the reference numeral 404. Concentric, cylindrical inner and outer wall surfaces 408, 410 upstream of the diffuser inlet plane 402 define an annular flow passage 409 which carries fluid into the diffuser. The inner wall 412 of the diffuser is a surface of revolution about the axis 411. The outer wall 414 of the diffuser includes an upstream portion 416 and a downstream portion 418. The upstream portion 416 is a surface of revolution about the axis 411. The downstream portion 418 is an undulating surface comprised of downstream extending, alternating ridges 420 and troughs 422, each of which are substantially U-shaped in cross section taken perpendicular to the principal flow direction. The walls of the troughs and ridges smoothly join each other along their length to create a smoothly undulating surface around the entire circumferential extent of the diffuser. The smooth wave-shape of the outer wall 414 at the diffuser outlet 404 can be seen in Fig. 8.

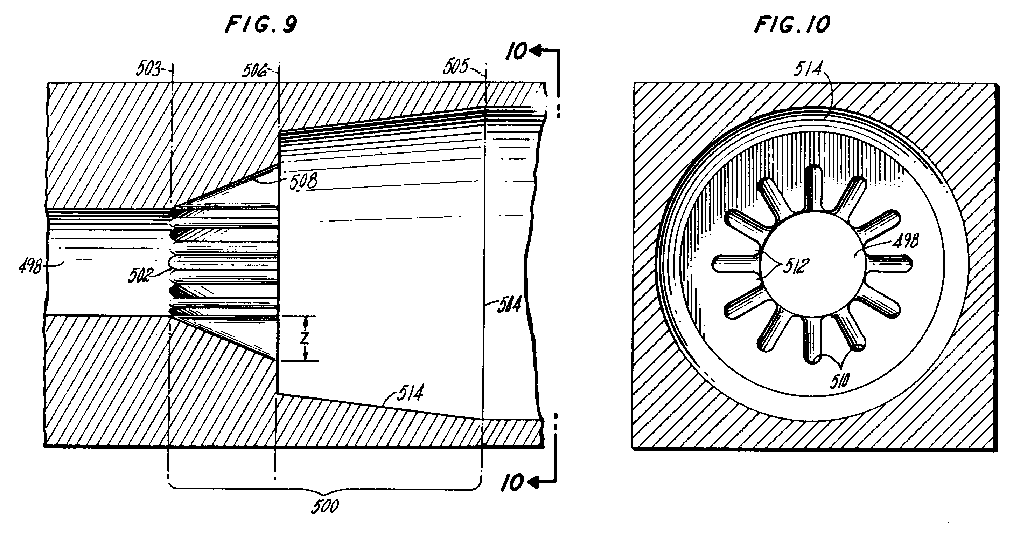

In the embodiment of Figs. 9 and 10, a constant diameter passage 498 carries fluid to a diffuser 500 having an inlet 502 (in a plane 503) and an outlet 504 (in a plane 505). The inlet 502 has a first diameter, and the outlet 504 has a second diameter larger than the first diameter. A step change in the passage cross-sectional area occurs at the plane 506; and the passage thereafter continues to increase in diameter to the outlet 504. The diameter remains constant downstream of the plane 505. The diffuser wall 508 upstream of the plane 506 has a plurality of U-shaped, circumferentially spaced apart troughs and ridges 510, 512, respectively, formed therein, extending in a downstream direction and increasing in depth and height to a maximum "amplitude" Z at the plane 506. The troughs are designed to flow full. The flow thereby stays attached to the walls 508 up to the plane 506. While some losses will occur at the plane 506 and for a short distance downstream thereof due to the discontinuity, the troughs and ridges create a flow pattern immediately downstream of the plane 506 which significantly reduces such losses, probably by directing fluid radially outwardly in a more rapid manner than would otherwise occur at such a discontinuity. The flow then reattaches to the diffuser wall 514 (which has a shallow diffusion angle) a short distance downstream of the discontinuity, and stays attached to the diffuser outlet 504.

## Claims

1. Diffuser, adapted to carry fluid in a downstream, principal flow direction (102,210), comprising wall means (110,112; 206,208,212,214; 314; 414; 508,514) defining an inlet (104;204;308;402;502) to said diffuser (100;200;300;400;500) and an outlet (114; 220;310;404;504) to said diffuser with said inlet having a cross-sectional area less than the cross-sectional area of the outlet, said wall means having surface means extending from said inlet to said outlet, and said wall means having means to prevent or delay streamwise, two-dimensional boundary layer separation from said surface means, characterized in that said means to prevent or delay streamwise, two-dimensional boundary layer separation comprises a plurality of downstream extending, adjoining, alternating troughs (118;216;320;422;510) and ridges (120,218;322;420;512) formed in said surface means and sized and oriented such that the diffuser (100;200;300;400;500) continues to increase in cross-sectional area from its inlet (104;204;308;402;502) to its outlet (114;220;310;404;504), said troughs and ridges being U-shaped in cross-section taken perpendicular to the principal flow direction (102;210), adjoining troughs (118;216;320;422;510) and ridges (120;218;322;420;512) blending smoothly with each other along their length forming a smoothly undulating surface extending downstream, said undulations initiating upstream of where streamwise, two-dimensional boundary layer separation on said diffuser surface would occur.

2. Diffuser according to claim 1, characterized in that at the location of maximum trough depth Z the distance between adjacent troughs (118;216;320;422;510) is X, and the ratio X/Z is between 0.5 and 4.0.

3. Diffuser according to claim 1 or 2, characterized in that said troughs (118;216;320;422;510) and ridges (120;218;322;420;512) extend to said diffuser outlet (114;220;310;404;504).

4. Diffuser according to anyone of claims 1 to 3, characterized in that the location of maximum trough depth is at said diffuser outlet (114;220;310;404;504).

5. Diffuser according to anyone of claims 1 to 4, characterized in that said diffuser (100) is a two-dimensional diffuser having a pair of spaced apart, parallel sidewalls (108) extending from said inlet (104) to said outlet (114).

6. Diffuser according to anyone of claims 1 to 4, characterized in that said diffuser (300) is axisymmetric from its inlet (308) to its outlet (310).

7. Diffuser according to anyone of claims 1 to 4, characterized in that said diffuser (400) is annular from its inlet (402) to its outlet (404).

8. Diffuser according to claim 6, characterized in that said undulating surface extends around the entire circumferential extent of said diffuser (300).

9. Diffuser according to anyone of claims 1 to 8, characterized in that said troughs (118;216;320;422;510) increase gradually in depth in the downstream direction from substantially zero at their upstream ends to their maximum depth.

10. Diffuser according to anyone of claims 1 to 9, characterized in that said troughs (118,216;320;422;510) have a maximum depth of at least twice the 99% boundary layer thickness immediately forward of the upstream ends of the troughs.

**Revendications**

1. Diffuseur destiné à entraîner un fluide dans une direction aval d'écoulement principal (102, 210), comprenant des moyens de paroi (110, 112; 206, 208, 212, 214; 314; 414; 508, 514) définissant une entrée (104; 204; 308; 402; 502) pour ledit diffuseur (100; 200; 300; 400; 500) et une sortie (114; 220; 310; 404; 504) pour ledit diffuseur, ladite entrée ayant une superficie de section inférieure à la superficie de section de ladite sortie, lesdits moyens de parois ayant des moyens de surface s'étendant de ladite entrée à ladite sortie, et lesdits moyens de paroi ayant des moyens pour empêcher ou retarder une séparation bidimensionnelle de la couche limite dans le sens du courant vis-à-vis des moyens de surface, *caractérisé en ce que* lesdits moyens pour empêcher ou retarder une séparation bidimensionnelle de la couche limite dans le sens du courant comprennent une pluralité de gouttières (118; 216; 320; 422; 510) et de cannelures (120, 218; 322; 420; 512) s'étendant dans le sens aval, adjacentes et alternées, formées dans lesdits moyens de surface et d'une taille et d'une orientation telles que le diffuseur (100; 200; 300; 400; 500) continue de présenter une superficie de section croissant entre son entrée (104; 204; 308; 402; 502) et sa sortie (114; 220; 310; 404; 504), lesdites gouttières et cannelures étant de section en U prise perpendiculairement au sens d'écoulement principal (102; 210), les gouttières (118; 216; 320; 422; 510) et les cannelures (120, 218; 322; 420; 512) se fusionnant sans rupture les unes avec les autres sur leur longeur en formant une surface à ondulation lisse s'étenant vers l'aval, lesdites ondulations commençant en amont du lieu ou devrait se produire la séparation bidimensionnelle de la couche limite dans le sens du courant sur la surface du diffuseur.

2. Diffuseur selon la revendication 1, *caractérisé en ce que* à l'emplacement de la profondeur maximum Z de gouttière, la distance entre des gouttières adjacentes (118; 216; 320; 422; 510) est X et le rapport X/Z est compris entre 0,5 et 4.

3. Diffuseur selon la revendication 1 ou 2, *caractérisé en ce que* lesdites gouttières (118; 216; 320; 422; 510) et cannelures (120; 218; 322; 420; 512) s'étendent jusqu'à ladite sortie (114; 220; 310; 404; 504) du diffuseur.

4. Diffuseur selon l'une quelconque des revendications 1 à 3, *caractérisé en ce que* l'emplacement de la profondeur maximum de gouttière se situe à la sortie (114; 220; 310; 404; 504) du diffuseur.

5. Diffuseur selon l'une quelconque des revendications 1 à 4, *caractérisé en ce que* ledit diffuseur (100) est un diffuseur bidimensionnel possédant deux parois parallèles distinctes (108) s'étendant de ladite entrée (104) à ladite sortie (114).

6. Diffuseur selon l'une quelconque des revendications 1 à 4, *caractérisé en ce que* ledit diffuseur (300) est axisymétrique de son entrée (308) à sa sortie (310).

7. Diffuseur selon l'une quelconque des revendications 1 à 4, *caractérisé en ce que* ledit diffuseur (400) est annulaire de son entrée (402) à sa sortie (404).

8. Diffuseur selon la revendication 6, *caractérisé en ce que* ladite surface ondulée entoure la totalité de l'étendue circonférentielle dudit diffuseur (300).

9. Diffuseur selon l'une quelconque des revendications 1 à 8, *caractérisé en ce que* lesdites gouttières (118; 216; 320; 422; 510) croissent graduellement en profondeur dans la direction aval de sensiblement zéro à leurs extrémités amont jusqu'à leur profondeur maximum.

10. Diffuseur selon l'une quelconque des revendications 1 à 9, *caractérisé en ce que* lesdites gouttières (118; 216; 320; 422; 510) ont une profondeur maximum d'au moins deux fois 99% de l'épaisseur de la couche limite immédiatement en avant des extrémités aval des gouttières

**Patentansprüche**

1. Diffusor zum Leiten von Fluid in einer stromabwärtigen Hauptströmungsrichtung (102; 210), mit einer Wandeinrichtung (110, 112; 206, 208, 212, 214; 314; 414; 508, 514), die einen Einlaß (104; 204; 308; 402; 502) für den Diffusor (100; 200; 300; 400; 500) und einen Auslaß (114; 220; 310; 404; 504) für den Diffusor bildet, wobei der Einlaß eine Querschnittsfläche hat, die kleiner ist als die Querschnittsfläche des Auslasses, wobei die Wandeinrichtung eine Oberflächeneinrichtung hat, die sich von dem Einlaß zu dem Auslaß erstreckt, und wobei die Wandeinrichtung eine Einrichtung hat, um eine in Strömungsrichtung erfolgende, zweidimensionale Grenzschichtablösung von der Oberflächeneinrichtung zu verhindern oder zu verzögern, dadurch gekennzeichnet, daß die Einrichtung zum Verhindern oder Verzögern einer in Strömungsrichtung erfolgenden, zweidimensionalen Grenzschichtablösung mehrere sich stromabwärts erstreckende, benachbarte, abwechselnde Senken (118; 216; 320; 422; 510) und Rücken (120, 218; 322; 420; 512) aufweist, die in der Oberflächeneinrichtung gebildet und so bemessen und ausgerichtet sind, daß der Diffusor (100; 200; 300; 400; 500) in der Querschnittsfläche von seinem Einlaß (104; 204; 308; 402; 502) zu seinem Auslaß (114; 220; 310; 404; 504) fortlaufend zunimmt, wobei die Senken und Rücken im Querschnitt rechtwinkelig zu der Hauptströmungsrichtung (102; 210) U-förmig sind, benachbarte Senken (118; 216; 320; 422; 510) und Rücken (120; 218; 322; 420; 512) auf ihrer Länge gleichmäßig ineinander übergehen und eine gleichmäßig gewellte Oberfläche bilden, die sich stromabwärts erstreckt, wobei die Wellungen stromaufwärts der Stelle beginnen, wo eine in Strömungsrichtung erfolgende, zweidimensionale Grenzschichtablösung an der Diffusoroberfläche auftreten würde.

2. Diffusor nach Anspruch 1, dadurch gekennzeichnet, daß an der Stelle maximaler Senkentiefe Z der Abstand zwischen benachbarten Senken (118; 216; 320; 422; 510) X ist und das Verhältnis X/Z zwischen 0,5 und 4,0 liegt.

3. Diffusor nach Anspruch 1 oder 2, dadurch gekennzeichnet, daß die Senken (118; 216; 320; 422; 510) und Rücken (120; 218; 322; 420; 512) sich zu dem Diffusorauslaß (114; 220; 310; 404; 504) erstrecken.

4. Diffusor nach einem der Ansprüche 1 bis 3, dadurch gekennzeichnet, daß sich die Stelle maximaler Senkentiefe an dem Diffusorauslaß (114; 220; 310; 404; 504) befindet.

5. Diffusor nach einem der Ansprüche 1 bis 4, dadurch gekennzeichnet, daß der Diffusor (100) ein zweidimensionaler Diffusor ist, der zwei beabstandete, parallele Seitenwände (108) hat, welche sich von dem Einlaß (104) zu dem Auslaß (114) erstrecken.

6. Diffusor nach einem der Ansprüche 1 bis 4, dadurch gekennzeichnet, daß der Diffusor (300) von seinem Einlaß (308) bis zu seinem Auslaß (310) axialsymmetrisch ist.

7. Diffusor nach einem der Ansprüche 1 bis 4, dadurch gekennzeichnet, daß der Diffusor (400) von seinem Einlaß (402) bis zu seinem Auslaß (404) ringförmig ist.

8. Diffusor nach Anspruch 6, dadurch gekennzeichnet, daß sich die gewellte Oberfläche über die gesamte Umfangsausdehnung des Diffusors (300) erstreckt.

9. Diffusor nach einem der Ansprüche 1 bis 8, dadurch gekennzeichnet, daß die Senken (118; 216; 320; 422; 510) in der Tiefe in stromabwärtiger Richtung von im wesentlichen null an ihren stromaufwärtigen Ende bis zu ihrer maximalen Tiefe allmählich zunehmen.

10. Diffusor nach einem der Ansprüche 1 bis 9, dadurch gekennzeichnet, daß die Senken (118: 216; 320; 422; 510) eine maximale Tiefe von wenigstens dem Zweifachen der 99%-Grenzschichtdicke unmittelbar vorderhalb der stromaufwärtigen Enden der Senken haben.

FIG. 1

FIG. 2

FIG. 3

FIG. 4

FIG. 5

FIG. 6

FIG. 7

FIG. 8

FIG.9

FIG.10

EP 0 244 335 B1